# EUROPEAN PATENT SPECIFICATION

(11) **EP 4 176 751 B1**
(45) Date of publication and mention of the grant of the patent: **15.04.2026**
(21) Application number: 21217960.0
(22) Date of filing: 28.12.2021
(51) Int. Cl.: A42B 3/04

(54) **SMART RESCUE HELMET FOR FIREFIGHTERS**
INTELLIGENTER RETTUNGSHELM FÜR FEUERWEHRLEUTE
CASQUE DE SAUVETAGE INTELLIGENT POUR POMPIERS

(30) Priority: 09.11.2021 PL 43948421
(43) Date of publication of application: 10.05.2023
(73) Proprietor: Brandbull Polska S.A., 03-230 Warszawa (PL)
(72) Inventor: Górecki, Kamil, 85-790 Bydgoszcz (PL)
(74) Representative: Jedrzejewski, Michal

(56) References cited:
- EP-A1- 3 508 087
- AU-A4- 2013 101 173
- CN-A- 108 378 450
- CN-A- 110 859 352
- KR-A- 20160 015 089

## Description

The object of the invention is a smart helmet for a firefighter. The helmet is intended for head protection, but also for communication in a broad sense, mainly with the command centre and thanks to devices placed in it, make rescuer's and/or firefighter's work more safe and effective.

Rescue helmets, especially firefighters' helmets for protecting the rescuer/firefighter's head against splinters of solid objects and mechanical injuries consisting of a shell in the shape similar to a hemisphere are known and widely used. These helmets have an inner construction formed by a retention system with attached straps and protective padding with easy adjustment on all axes, edge protection and neck protection. Rescue helmets are also equipped with a number of additional accessories and sockets as required. A common piece of equipment used by the rescuer/firefighter during rescue operations is a radio communication kit for use with helmets and masks. If it is not possible to hide a boom microphone or an ear microphone under a protective suit, a headset with a bone conduction microphone becomes an alternative.

Document DE93431 0793 relates to a tactile microphone (1) which is in contact with a solid body whose acoustic vibrations it is intended to receive. The tactile microphone has a base (3) in which an electronic circuit is arranged. Elastic bellows (4) are placed on the underside of the base (3), and a proper microphone is placed on the inner side of the bottom thereof. Application No. US2015157079 discloses an internal structure for a helmet that is shaped to be worn on a wearer's head and protects the wearer from external elements. The helmet internal structure includes one or more connecting ports for connecting an electronic device, a control interface for connecting a control unit, a wiring arrangement for connecting one or more connecting ports to the control interface, and a mounting arrangement for attaching an accessory to the internal structure. Further, the internal structure of the helmet having a shape to protect the head of the wearer from external impact is detachably attached to the helmet.

A special element of the rescue helmet is a movable face and eye shield in the front part, the so-called visor.

There is known from patent description P.294473 a protective head, face and eye shield with an automatically dimming visor, consisting of a protective mask (1) equipped with a visor (2), having the form of a transmissive liquid crystal panel, which consists of a glass case, provided on its outer surfaces with polarizers of mutually perpendicular directions of polarization planes, and on its inner surfaces uniform optically transparent electrodes are applied. A layer of liquid crystal is placed between the electrodes in such a way that the molecules of liquid crystal adhering to the electrodes, when the panel is not turned on, have an orientation in accordance with the directions of the polarizers. A protective filter and an optical, corrective filter are placed on the outer surfaces of the housing. The panel through a detector (3), a control circuit (4) is connected to a power supply circuit (5), equipped, inter alia, with a solar battery.

The visor of a rescue helmet, especially a firefighter helmet, known from utility model description W. 127745, constituting a pivoting element on the helmet shell and serving as a face shield for the user, is characterized by the fact that it is integrally equipped with a microdisplay (7) and a lens system (7a) for receiving an image from a camera (6) integrated into the helmet (1).

A firefighter helmet known from utility model description W.125198 is characterized by the fact that it is additionally equipped with a thermal imaging camera (6) mounted on the shell (1) of the helmet and a microdisplay (7) with a lens (7a) cooperating wirelessly with the camera, mounted at the end of the boom (8), which has an adjustment (9) for the vertical position of the microdisplay (7) and an adjustment (10) for the horizontal position of the microdisplay (7), and furthermore is provided with a stop (11) to ensure a stable angular position and a stable deflection when the camera (6) is not in use. Whereas, the firefighter helmet from utility model W. 125199 is characterized by the fact that it is additionally equipped with a thermal imaging camera (6) mounted on the shell (1) of the helmet and a microdisplay with a lens (7) cooperating with the camera, mounted integrally on the face shield, that is the visor (2).

Patent publication KR20160015089 discloses a smart protective helmet for firefighters includes: a display unit which scans an area around the helmet and outputs a signal applied from the outside as an image; an infrared ray sensing thermal image camera which reads infrared emitting values from every object around the helmet in order to reset an image of the front side of the helmet; and a radar scanning unit which scans the front area as moving in a predetermined space where the helmet is located based on a radar sensor in order to sense objects and generate a signal regarding the sensed objects; and a control unit which reads the infrared emitting values from the objects around the helmet by driving the infrared ray sensing thermal image camera when the front scan rate of the display unit is equal to or less than a first scan rate and drives the radar scanning unit to transmit the signal regarding the sensed objects to the display unit in order to provide the image around the helmet when the front scan rate of the display unit is less than or equal to a first emitting value. According to the present invention, location and moving situation of firefighters are provided to a fire station and other firefighters, and thus help firefighting and lifesaving.

Patent publication CN108378450 discloses a fire fighting helmet including a long-distance combustible gas detector, a thermal imaging camera module, a head-mounted near-eye display module, a positioning instrument, a data communication and transmission module, an embedded core board, an earphone, a base station, and a fire fighting command centre are involved. According to the burning and explosion accident sensing and risk predicting early-warning intelligent fire fighting helmet implementing method, the real-time position of a fireman in a building can be displayed for the fireman by combining a fireman positioning technology, a building information model and real scene thermal image information, and projecting and displaying information through the head-mounted near-eye display module, so that the environment burning and explosion dangerousness and risk thereof are predicted in real time. When the fireman enters an unknown environmental place, a potential fire disaster explosion accident risk can be effectively predicted quickly; quick sensing and information communication of the fireman to a fire disaster accident scene can be realized through an advanced video and thermal imaging technology and an indoor positioning and communication transmission technology, so that thefire fighting rescuing scientific level and the capacity of the fireman are improved.

Patent publication CN108378450 discloses an AR fire-fighting helmet based on a distributed network, AR goggles are arranged at a viewing angle position, an infrared thermal imager and a visible light camera are arranged at the front end, a communication and positioning unit is arranged on one side of a main body, and signals of the AR goggles, the communication and positioning unit, the infrared thermal imager andthe visible light camera are all connected to a control component arranged on the other side of the main body; a main control unit of the control component receives image data of the infrared thermalimager and the visible light camera and data in the communication and positioning unit, the main control unit transmits the image data of the visible light camera to a command center through an imagetransfer unit in the communication and positioning unit, the main control unit together with an auxiliary control unit on the waist of a firefighter further carries out joint control to sense combustible gas, is connected with a sensing unit on the wrist of the firefighter to sense the vital signs of the firefighter and is in wireless transmission with a positioning unit at the sole to achieve inertial navigation positioning; and the main control unit reconstructs the image data, and the image data is displayed through the AR goggles. The AR fire-fighting helmet based on the distributed network realizes the fusion of various technologies and has high integration degree.

As can be seen from the above examples, new technologies are also entering the rescue service, including fire rescue in a special way. A firefighter helmet, which is supposed to perform first of all the function of head protection, is at the same time, through its proximity with organs of perception, more and more often used in various ways to monitor the environment in difficult conditions, to collect information in situation of limited visibility, to analyse collected information, to transmit this information to the command centre or to other rescuers and/or firemen. All this is to increase the safety of the rescuer - firefighter and to collect information about the course of rescue action in order to be able to analyse the course of action and to develop even better techniques for conducting rescue operations in the future.

A smart firefighter helmet according to the invention gives a tool for fulfilling these aims, that is solves the problem of preserving greater safety of rescuer-firefighter's work and at the same time gives him equipment, which enables greater effectiveness of work now and in the future.

The invention is set out in the appended set of claims.

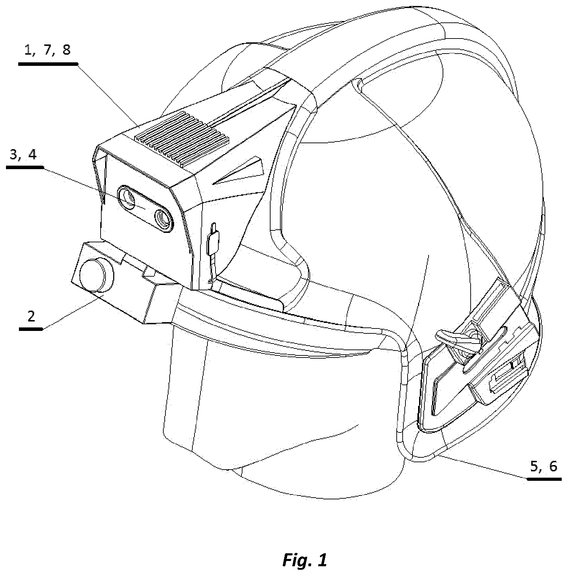

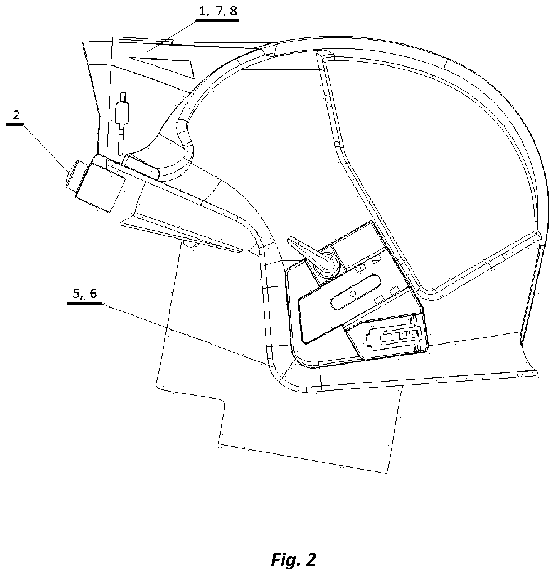

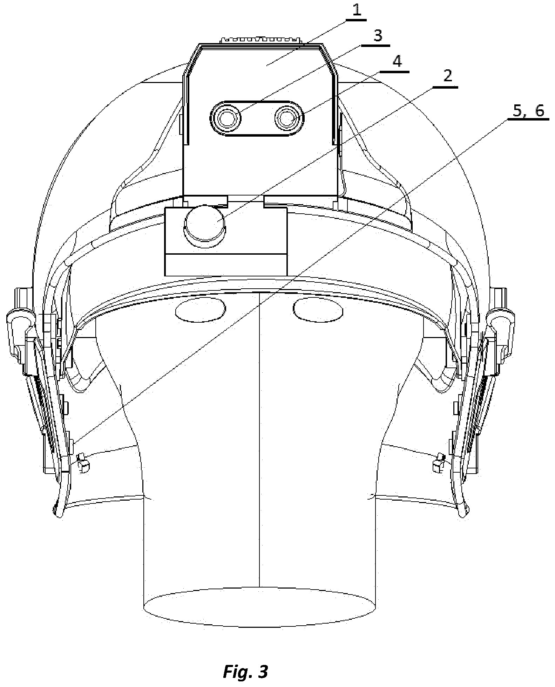

The object of the invention is shown in an example of the implementation in the drawing, in which fig. 1 shows a smart rescue helmet in axonometric view in front and side view, fig. 2 shows a smart rescue helmet in side view, fig. 3 shows the smart rescue helmet in front view.

A smart rescue helmet for the firefighters formed of a shell in the shape similar to a hemisphere, equipped inside with a shock absorbing canopy and a retention system and also in the front part with a rotatable visor, is equipped with a control module (1) in the form of a microcomputer (8), near-field display (2), a visible band camera (3) and a thermal imaging camera (4), a module of sensors monitoring physiological parameters (5) and the location of the firefighter (6) and a system of communication (7) with the command centre where the data readings are appropriately processed and stored in a dedicated database.

The control module in the form of microcomputer 8 is based on a 4-core 64bit processor in RAM architecture, performing the functions of controlling the battery power system, 2.4GHz and 5.0GHz IEEE 802.11b/g/n/ac wireless communication, Bluetooth 5.0, BLE, controlling the thermal imaging camera system, controlling the video camera system, controlling the near-field display system, monitoring the physiological parameter sensors and accelerometer data to determine the firefighter's spatial orientation.

In the firefighter's field of vision there is a near-field display (2) mounted that is built on a mini LCD screen with a resolution of 640x320 pixels and a diagonal of 0.26", with bright backlighting and an optical prism allowing a field of vision angle of 17 degrees. Display backlighting at 1000 nits allows for a clear picture regardless of external lighting conditions.

A visible band camera (3) captures the scene and the compressed video stream is transmitted via CPU to the command centre.

The integrated thermal imaging camera (4) on a long-wave infrared detector LWIR with a mechanical shutter has a radiometric function and additionally the image from the thermal imaging camera (4) is fed directly to the near-field mini-display (2) of the firefighter supporting observation of the rescue operation site in poor visibility conditions while leaving the rescuer free to move, so called "hands-free". The thermal imaging camera image (4) is configurable in several colour variants, according to the action, whereby the selection of the variant is performed wirelessly by means of an application on a smartphone, with which the CPU connects upon activation.

An independently powered sensor module (5) of the rescuer's physiological parameters and accelerometer sensors are mounted in the helmet housing at the skin contact point and the information from the sensors is sent to the networked Smart Helmet CPU.

Firefighters' vital signs sensors along with parameters of all modules are broadcast via Bluetooth Low Energy 5.1/5.2 in the form of simple messages and the smart helmet scans the readings, determines the direction and distance from which the message was broadcast and transmits them to the command centre using MQTT information exchange protocol along with information about the time when it was broadcast by the source device. At the command centre, the data readings are processed accordingly and stored in an InfluxDB or approximate (time series database). Based on the direction and distance of other helmets from the smart helmet according to the invention, a graph is created and a real-time map of the firefighters is drawn. The location relative to each other is determined using triangulation and trilateration. Readings from other sensors are indicated on the map, respectively. When the data overlap, the data can be linked to the data scanned from the other helmet which will merge the two graphs into one whole.

Based on the accelerometer, gyroscope, and distance and direction data, it draws a map of how the firefighter with the smart helmet has moved since the device was turned on. This can also be used to map doors and passageways in a building.

## Claims

1. Smart rescue helmet, for a firefighter formed from a shell in the shape similar to a hemisphere, equipped internally with a shock absorbing canopy and a retention system and also in the front part with a rotating visor, a control module (1) in the form of a microcomputer (8), a near-field display (2), a visible band camera (3) and a thermal imaging camera (4), a sensor module (5) monitoring physiological parameters and the position of the firefighter (6) and a communication system (7) for communicating with a command centre where data readings are processed and stored in a dedicated database, whereby the near-field display (2) is built on a mini LCD screen with a bright backlight and an optical prism allowing for a wide-angle field of vision, whereby the visible band camera (3) can record the image from the action site so that a compressed video stream can be transmitted via a CPU of the smart rescue helmet to the command centre,
wherein the integrated thermal imaging camera (4) has a radiometry function and in addition, the image from the thermal imaging camera (4) can be fed directly to the mini near-field display (2) of the firefighter, wherein the sensor module (5) of the firefighter's physiological parameters and accelerometer sensors are mounted in the helmet shell in the place of contact with the skin of the firefighter and the information from these sensors is transmitted to the CPU of the networked smart rescue helmet, wherein the microcomputer (8) of the control module (1) is configured to perform the function of controlling a battery power circuit, a wireless communication circuit, a circuit of the thermal imaging camera (4), a circuit of the video camera (3), a circuit of the near-field display (2) and monitoring the physiological parameters sensor module (5) and a data of the accelerometer
and **wherein** the optical prism of the near-field display (2) allows for a field of vision of at least 17 degrees and the backlight illumination the near-field display (2) is 1000 cd/m² (1000nit), thus allowing for a clear image regardless of external lighting conditions.

2. Smart rescue helmet according to claim 1, wherein the thermal imaging camera (4) is built on a longwave detector in the infrared band LWIR with a mechanical shutter.

3. Smart rescue helmet according to claim. 1, wherein the image of the thermal imaging camera (4) is configurable in several colour variants according to the action being carried out, the selection of the variant being made wirelessly by means of an application on a smartphone to which the CPU of networked smart rescue helmet can connect upon activation.

4. Smart rescue helmet according to claim. 1, wherein the information of the sensors of vital function parameters of the firefighters together with the parameters of all modules can be broadcast via Bluetooth in the form of simple messages and the smart rescue helmet is configured to scan the readings, determine the direction and distance from which the message was transmitted and transmit them to the command centre using the MQTT information exchange protocol together with information about the time when it was transmitted by the source device.

## Patentansprüche

1. Intelligenter Rettungshelm für Feuerwehrleute, bestehend aus einer halbkugelförmigen Schale, die innen mit einer stoßdämpfenden Haube und einem Rückhaltesystem ausgestattet ist und im vorderen Teil über ein drehbares Visier verfügt, einem Steuermodul (1) in Form eines Mikrocomputers (8), einem Nahfelddisplay (2), eine Kamera für den sichtbaren Bereich (3) und eine Wärmebildkamera (4), ein Sensormodul (5) zur Überwachung der physiologischen Parameter und der Position des Feuerwehrmanns (6) sowie ein Kommunikationssystem (7) zur Kommunikation mit einer Kommandozentrale, in der die Daten ausgelesen, verarbeitet und in einer speziellen Datenbank gespeichert werden, wobei das Nahfelddisplay (2) auf einem Mini-LCD-Bildschirm mit heller Hintergrundbeleuchtung und einem optischen Prisma aufgebaut ist, das ein Weitwinkel-Sichtfeld ermöglicht, wobei die Kamera für den sichtbaren Bereich (3) das Bild vom Einsatzort aufzeichnen kann, so dass ein komprimierter Videostream über eine CPU des intelligenten Rettungshelms an die Kommandozentrale übertragen werden kann,
wobei die integrierte Wärmebildkamera (4) über eine Radiometriefunktion verfügt und zusätzlich das Bild der Wärmebildkamera (4) direkt auf das Mini-Nahfelddisplay (2) des Feuerwehrmanns übertragen werden kann, wobei das Sensormodul (5) für die physiologischen Parameter des Feuerwehrmanns und die Beschleunigungssensoren an der Stelle der Helmschale angebracht sind, an der diese die Haut des Feuerwehrmanns berührt, und die Informationen dieser Sensoren an die CPU des vernetzten intelligenten Rettungshelms übertragen werden, wobei der Mikrocomputer (8) des Steuermoduls (1) so konfiguriert ist, dass er die Funktion der Steuerung eines Batteriestromkreises, eines drahtlosen Kommunikationskreises, eines Kreises der Wärmebildkamera (4), eines Kreises der Videokamera (3), eines Kreises des Nahfelddisplays (2) und der Überwachung des physiologischen Parameter-Sensormoduls (5) und der Daten des Beschleunigungsmessers
und wobei das optische Prisma der Nahfeldanzeige (2) ein Sichtfeld von mindestens 17 Grad ermöglicht und die Hintergrundbeleuchtung der Nahfeldanzeige (2) 1000 cd/m²(1000 nit) beträgt, wodurch unabhängig von den äußeren Lichtverhältnissen ein klares Bild ermöglicht wird.

2. Intelligenter Rettungshelm nach Anspruch 1, wobei die Wärmebildkamera (4) auf einem Langwellendetektor im Infrarotband LWIR mit einem mechanischen Verschluss aufgebaut ist.

3. Intelligenter Rettungshelm nach Anspruch 1, wobei das Bild der Wärmebildkamera (4) je nach durchgeführter Aktion in mehreren Farbvarianten konfigurierbar ist, wobei die Auswahl der Variante drahtlos über eine Anwendung auf einem Smartphone erfolgt, mit dem sich die CPU des vernetzten intelligenten Rettungshelms bei Aktivierung verbinden kann.

4. Intelligenter Rettungshelm nach Anspruch 1, wobei die Informationen der Sensoren für die Vitalfunktionsparameter der Feuerwehrleute zusammen mit den Parametern aller Module über Bluetooth in Form einfacher Nachrichten übertragen werden können und der intelligente Rettungshelm so konfiguriert ist, dass er die Messwerte scannt, die Richtung und Entfernung bestimmt, aus der die Nachricht gesendet wurde, und sie zusammen mit Informationen über den Zeitpunkt, zu dem sie vom Quellgerät gesendet wurde, unter Verwendung des MQTT-Informationsaustauschprotokolls an die Kommandozentrale überträgt.

## Revendications

1. Casque de sauvetage intelligent, destiné à un pompier, formé d'une coque de forme hémisphérique, équipé à l'intérieur d'une voûte absorbant les chocs et d'un système de retenue, ainsi que, dans la partie avant, d'une visière rotative, d'un module de commande (1) sous la forme d'un micro-ordinateur (8), d'un écran de proximité (2), une caméra à bande visible (3) et une caméra thermique (4), un module capteur (5) surveillant les paramètres physiologiques et la position du pompier (6) et un système de communication (7) pour communiquer avec un centre de commande où les données lues sont traitées et stockées dans une base de données dédiée, l'écran de proximité (2) est construit sur un mini-écran LCD avec un rétroéclairage lumineux et un prisme optique permettant un champ de vision grand angle, la caméra à bande visible (3) pouvant enregistrer l'image du site d'intervention de sorte qu'un flux vidéo compressé puisse être transmis via un CPU du casque de sauvetage intelligent au centre de commande,
dans lequel la caméra thermique intégrée (4) a une fonction de radiométrie et, en outre, l'image provenant de la caméra thermique (4) peut être transmise directement au mini-écran à champ proche (2) du pompier, le module de capteurs (5) des paramètres physiologiques du pompier et les capteurs accélérométriques étant montés dans la coque du casque à l'endroit où celle-ci est en contact avec la peau du pompier, et les informations provenant de ces capteurs étant transmises à l'unité centrale du casque de sauvetage intelligent connecté, le micro-ordinateur (8) du module de commande (1) est configuré pour exécuter la fonction de commande d'un circuit d'alimentation de batterie, d'un circuit de communication sans fil, d'un circuit de la caméra thermique (4), d'un circuit de la caméra vidéo (3), d'un circuit de l'écran de proximité (2) et de surveillance du module de capteurs de paramètres physiologiques (5) et des données de l'accéléromètre
et dans lequel le prisme optique de l'écran de proximité (2) permet un champ de vision d'au moins 17 degrés et l'éclairage par rétroéclairage de l'écran de proximité (2) est de 1000 cd/m² (1000 nit), permettant ainsi une image claire quelles que soient les conditions d'éclairage externes.

2. Casque de sauvetage intelligent selon la revendication 1, dans lequel la caméra thermique (4) est construite sur un détecteur à ondes longues dans la bande infrarouge LWIR avec un obturateur mécanique.

3. Casque de sauvetage intelligent selon la revendication 1, dans lequel l'image de la caméra thermique (4) est configurable en plusieurs variantes de couleurs en fonction de l'action effectuée, la sélection de la variante s'effectuant sans fil au moyen d'une application sur un smartphone auquel le processeur du casque de sauvetage intelligent en réseau peut se connecter lors de son activation.

4. Casque de sauvetage intelligent selon la revendication 1, dans lequel les informations des capteurs des paramètres vitaux des pompiers ainsi que les paramètres de tous les modules peuvent être diffusées via Bluetooth sous forme de messages simples et le casque de sauvetage intelligent est configuré pour scanner les lectures, déterminer la direction et la distance à partir desquelles le message a été transmis et les transmettre au centre de commande à l'aide du protocole d'échange d'informations MQTT, ainsi que les informations relatives à l'heure à laquelle il a été transmis par l'appareil source.
